# EUROPEAN PATENT APPLICATION

(11) **EP 1 020 855 A1**
(43) Date of publication of application: **19.07.2000**
(21) Application number: 00300047.8
(22) Date of filing: 06.01.2000
(51) Int. Cl.: G11B 19/12, G11B 23/28, G11B 23/30, G11B 20/00

(54) **Disk, recording/reproduction apparatus, and recording/reproduction method**

(30) Priority: 18.01.1999 JP 883299
(71) Applicant: HITACHI, LTD., Chiyoda-ku, Tokyo (JP)
(72) Inventor: Ono, Hiroaki, Mito-shi, Ibaragi (JP); Higuchi, Shigemitsu, Kanagawa (JP)
(74) Representative: Calderbank, Thomas Roger

(57) **Abstract**

Enhancement of the operational capability of a disk mounted with a storage for recording management information and catalog information for main information is intended.

Recording/reproduction of information into or from the storage on the disk is performed before the disk starts to turn. For instance, a disk fitting aid member is arranged in a recording/reproduction apparatus, and reproduction or recording of management information and catalog information for main information recorded or to be recorded in the storage is started triggered by the operation of the fitting aid member. Or, for instance, a recording/reproduction apparatus is mounted with a disk detector, with which the mounting of the disk on a tray can be detected, and the recording/reproduction of information into or from the storage is started triggered by this detection. As information can be recorded or reproduced into or from the storage before the disk starts turning, operational capability is enhanced.

## Description

The present invention relates to an optical disk and a recording/reproduction apparatus using it, and more particularly to an optical disk having on a part of the disk a recording/reproduction unit differing from an optical disk recording medium and early reading of information in a recording/reproduction apparatus using the optical disk.

In recent years, various systems using an optical disk, which is mass producible and highly reliable, as the medium have become commercially available. Typical examples include compact disks (CD) which are optical disks for music, digital video disks (DVD) which are optical disks for cinemas and other audiovisual contents, and CD-ROMs and DVD-ROMs for use on a computer for application software, game software and various data recording. There also are optical disk-based rewritable optical recording media such as MOs, CD-Rs, CD-RWs, DVD-RAMs and DVD-RWs for backup recording of personal information.

Any of these optical disk media becomes capable of recording/reproduction only when it is loaded into a recording/reproduction apparatus and, after the disk is turned to a prescribed frequency of revolutions, and an optical head goes to a prescribed recording or reproducing position. Therefore, before recording or reproduction is started, revolution control to acceleration to the prescribed frequency and control of seeking, focusing and tracking to bring the optical head to the prescribed position, which took a considerable length of time. As a result, these troublesome control procedures have to be gone through before actual reproduction or recording if it is desired only to reproduce or record contents recorded or to be recorded on the disk, such as disk management information or catalog information.

The configuration of such optical disks as CDs, CD-ROMs, DVDs and DVD-ROMs, which are manufactured by the molding of plastic sheets, permits many data-recorded disk at low cost, but they are read only disks which allow no subsequent recording of data on them. It is therefore impossible to process data on the disk and record the result of processing on the disk for storage, or to record and store the number of times the disk has been used. Accordingly such disks are inconvenient when it is desired to record the result of a game or the like, or to use them for an information management system to limit the use of application software or to limit the number of times musical or audiovisual information is played back.

Obviously, it is possible to form a rewritable recording medium on a part of the disk and record management information there, but recording requires an optical head of a higher output than that of a playback only apparatus, resulting in a more expensive recording/reproduction apparatus. Furthermore, even if the disk is made of a rewritable recording medium, there remains the aforementioned disadvantage that disk management information cannot be read or written until disk attains the speed of its regular revolutions.

For backup recording of personal information, there are rewritable optical recording media using an optical disk such as MO, CD-R, CD-RW, DVD-RAM or DVD-RW. However, even with such a recording disk, the user still has to turn the disk and, after carrying out prescribed controls, read the catalog information in the disk in order to check what kind of information is recorded. Therefore, in order for the user to identify the recorded contents, he or she has to take the trouble of writing the recorded contents on the label or turn the disk and wait until the information becomes readable.

On the other hand, as a way to accomplish information management and contents checking of main information on another medium than that for the recording of main information, there is a system by which, for instance, a semiconductor memory is mounted on a magnetic tape cartridge and information management and contents checking for a magnetic tape on which the main information is recorded is accomplished with that semiconductor memory. In this case, however, since the semiconductor memory is disposed in the cartridge body, accessing data in the semiconductor memory is carried out by bringing the semiconductor memory into direct contact. Therefore, though it is possible to apply this system and mount, for instance, a semiconductor memory on the disk, the method of information transfer is difficult to design because the semiconductor memory itself also turns.

Furthermore, even such information as could be immediately found upon inserting a disk, if the disk is contained in a cartridge for recording-inhibited (REC inhibit) information or the like, into a disk recording/reproduction apparatus by manipulating a mechanical switch provided in a part of the cartridge, can only be known after the disk has undergone revolution control if it is a bare disk not contained in a cartridge.

An object of the present invention is to provide an optical disk, together with a recording/reproduction apparatus using it, wherein the disk is a low cost playback only optical disk for recording a large quantity of data, manufactured by molding a plastic sheet, such as a CD, CD-ROM, DVD or DVD-ROM, permitting subsequent recording of management information and reproduction of the recorded management information for application to an information management system or the like for information recorded on the disk allowing the recording of no additional information, such as a game, application software, music, cinema or the like, for instance, to store the result of the game, to limit the use of the application software or to restrict the number of times the music or cinema information or the like is played back. Another object of the invention is to provide an optical disk, together with a recording/reproduction apparatus using it, which enables the user, for backup recording of personal information, to easily check what information he or she has recorded on a rewritable optical recording medium using an optical disk such as MO, CD-R, CD-RW, DVD-RAM or DVD-RW. The invention makes it possible to achieve these objects by mounting a storage for recording management information and catalog information on a part of the optical disk, and to easily and reliably record or reproduce the management information and catalog information so as to check the information before the disk begins to turn in its regular state.

In order to solve the above-noted problem, the optical disk and the recording/reproduction apparatus according to the invention is mounted within the optical disk, in addition to a recording medium for recording management information, with a storage for management of the main information or checking catalog information on the main information as an IC chip formed by, for instance, a semiconductor process or the like. Further, the storage has, in addition to a signal processing unit for subjecting management information for main information and catalog information transferred from outside the disk to signal processing and converting them into data to be recorded and a memory unit for recording the data to be recorded, a built-in controller for instructing and managing the recording/ reproduction and, according to the contents of information, judging and managing the way the main information is used in such manners as limiting the number of times main information is used or reproduced. Also, as the IC chip is a circuit formed by a semiconductor process, an electromagnetic coupler as a receiver is either built into or arranged adjacent to the IC chip as a means to supply driving power to these circuits.

Or it is arranged on the disc in one or more turns in a circular or spiral shape.

It further has a built-in rectifier for converting signals transferred by the receiver into a power source. Similarly, as a means to communicate the management information between the optical disk and the recording/reproduction apparatus, an electromagnetic coupler, such as an antenna, is either built in or arranged adjacently as a transmitter/ receiver. Or it is arranged on the disc in one or more turns in a circular or spiral shape.

On the part of the recording/reproducing apparatus, there is provided a communication unit for performing transmission/reception with the storage on the disk with the electromagnetic coupler. The communication unit is mounted with a transmitter/receiver for recording/reproducing the management information and catalog information on the disk, and an electromagnetic coupler for supplying power to an IC unit on the disk as a transmitter.

In order to accomplish recording or reproduction of information into or from the storage before the disk revolves, a tray or a fitting aid member such as a disk holding member is arranged on a disk turning device in the recording/ reproducing apparatus, for instance, so that the user can readily mount the disk, and information is recorded into or reproduced from the storage, triggered by an action of an opening/closing mechanism or a disk loading mechanism for pulling the fitting aid member out of the recording/ reproduction apparatus. Thus, as soon as the tray on which to place the disk or the disk holding member is pulled out, power supply to the disk is started on the basis of the information that it is pulled out, and after the storage on the disk becomes ready to record or reproduce, the management information and catalog information for the main information recorded on the storage is reproduced or recorded. During this while, the disk itself is placed on the tray, and the pulled out tray is inserted into the recording/reproduction apparatus by the disk loading mechanism to place the disk on a turntable.

Then, after the disk is clamped with a damper, the disk undergoes revolution control and signals recorded in the recording medium on the disk undergo focusing and tracking control, the information is recorded into or reproduced from the recording medium. During the aforementioned controls, the management information and catalog information written in the storage on the disk are conveyed to the recording/reproduction apparatus or the user, so that, according to their contents, before the servo controls are completed, the recording/ reproduction apparatus or the user can communicate, if the disk does not permit recording, the information to that effect to the user and eject the disk or, if it is a playback-restricted disk, can update anew the number of times it is permitted to be played back and play back the disk, resulting in improved operational capability.

Whereas the foregoing description referred to a method by which recording/reproduction of information in the storage on the disk is triggered by the start of the operation of the disk loading mechanism, an alternative method is conceivable by which a disk detector is mounted in a prescribed position on the pulled out tray or in a prescribed position in the recording/reproduction apparatus, the disk detector detects the mounting of the disk on the tray, its insertion into the recording/reproduction apparatus or the mounting of the disk on the turntable, and this detection triggers the start of the recording/reproduction of information into or from the storage on the disk. As this method ensures that the start of the recording/reproduction of information into or from the storage follow the secure mounting of the disk by the user, the electric connection between the recording/reproduction apparatus and the storage is accomplished more reliably.

In the drawings:
Fig. 1, illustrating one preferred embodiment of the present invention, is a system configuration diagram of an optical disk and a recording/reproduction apparatus.
Fig. 2, illustrating the preferred embodiment of the invention, is a structural diagram of the optical disk.
Fig. 3, illustrating the preferred embodiment of the invention, is a schematic diagram of the recording/ reproduction apparatus.
Fig. 4, illustrating another preferred embodiment of the invention, is a schematic diagram of a recording/ reproduction apparatus.
Fig. 5, illustrating still another preferred embodiment of the invention, is a schematic diagram of a recording/reproduction apparatus.

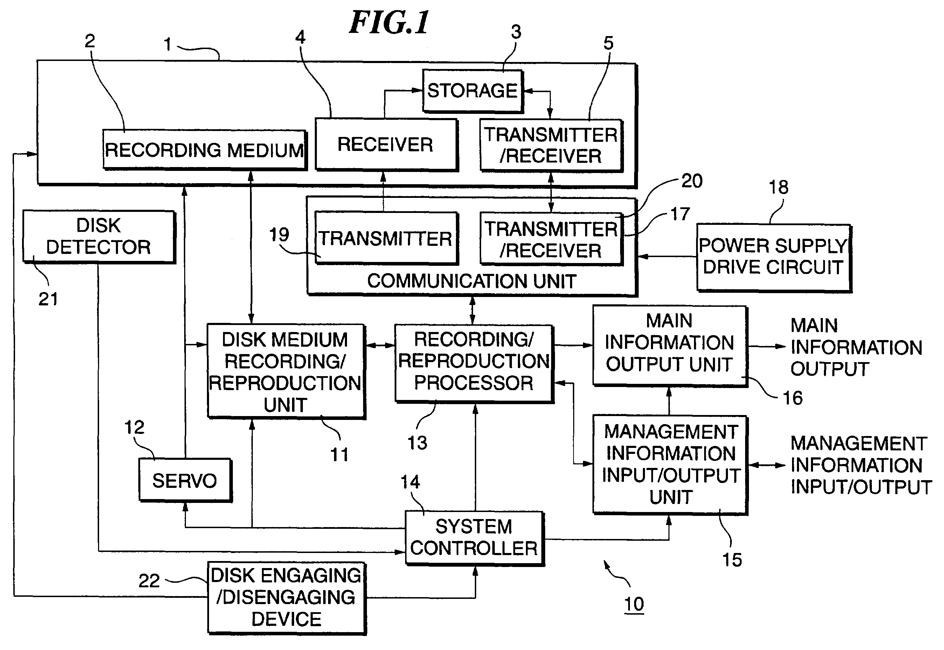

An optical disk and a recording/reproduction apparatus according to the present invention has, mounted in the optical disk, a storage for managing main information in the form of, for instance, an IC chip fabricated by a semiconductor process or the like in addition to a recording medium in which main information is recorded. Fig. 1 is a diagram illustrating the system configuration of a recording/reproduction apparatus 10 and a disk 1 according to the invention.

First will be described the configuration within the disk 1. The disk 1 has a recording medium 2 for recording main information and a storage 3 for managing the main information. The storage 3 has a signal processing unit for subjecting management information for main information transferred from outside the disk to signal processing to convert it into data to be recorded; a memory unit for recording the data to be recorded; and a built-in controller for instructing and managing the recording/reproduction and, according to the contents of information, judging and managing the way the main information is used in such manners as limiting the number of times main information is used or reproduced. Also, as the IC chip is a circuit formed by a semiconductor process, a receiver 4 formed of an electromagnetic coupler, such as an antenna, is built into the disk 1 as a means to supply driving power to these circuits. Further, the receiver 4 has a built-in rectifier for converting signals transferred by the receiver into a power source. Similarly, as a means to communicate the management information between the optical disk and the recording/reproduction apparatus 10, an electromagnetic coupler, such as an antenna, is built in as a transmitter/ receiver 5. By configuring these elements into a single IC chip, the cost of the storage can be reduced.

Next is shown a system configuration diagram of a recording/reproduction apparatus 20.

As stated above, reference numeral 1 denotes a disk; 2, a recording medium; and 3, a storage. Further, 11 denotes a disk medium recording/reproduction unit; 12, a servo; 13, a recording/reproduction processor; 14, a system controller; 15, a management information input/output unit; 16, a main information output unit; 17, a communication unit; 18, a power supply drive circuit; and 21, a disk detector. The above-mentioned recording/reproduction apparatus 10 consists of these blocks.

Each block shown in Fig. 1 will be described below.

The recording medium 2 on the disk 1 may be a playback only optical disk, such as a CD, CD-ROM, DVD or DVD-ROM, on which is recorded, for instance, application software, game software, music, cinema or the like. Or it may be a rewritable optical recording medium, such as an MO, CD-R, CD-RW, DVD-RAM or DVD-RW on which is recorded backup information for personal information or the like. The storage 3 consisting of an IC chip or the like prepared by a semiconductor process is intended for recording management information, catalog information and so forth for the main information. The disk medium recording/reproduction unit 11 independently records or reproduces information into or from the recording medium and, if the recording medium 2 is an optical disk, it is an optical head.

The recording/reproduction processor 13, in reproducing main information for instance, subjects reproduced information sent from the disk medium recording/reproduction unit 11 to extension, unfreezing of error codes, demodulation or some other processing, and delivers the processed information to the main information output unit, 16. Or, in order to transfer information from the management information input/output unit 15 to, for instance, the storage, it subjects the management information to compression, addition of error correction codes, modulation or some other processing and, after amplifying or processing in some other way the signals to be transferred with the communication unit 17, transfers it to the storage.

The storage, as it is formed of an IC chip, requires power supply. The power supply is transferred from the power supply drive circuit 18 via the communication unit 17 to the storage 2. The servo 12 performs control upon the disk type recording medium 2 for stable recording operation and reproducing operation. It is realized with a spindle motor, an actuator and a seek servo mechanism.

The transfer band of signals to be transferred to the communication unit 17 for the recording/reproduction of the management information and power supply should be outside the recording band of the main information so as not to affect the recording/reproduction of the main information.

The disk detector 21 is a means to sense the mounting of the disk 1 into the apparatus, and according to this sensed information the start timing of power supply to the storage or of recording/reproduction is determined. Further, a disk engaging/disengaging device 22 is an opening/closing mechanism or a loading mechanism for inserting or pulling the disk into or out of the recording/reproduction apparatus, and may be, for instance, a tray, an arm or the like.

The constituent elements of the above-described recording/reproduction apparatus are controlled by the system controller 14.

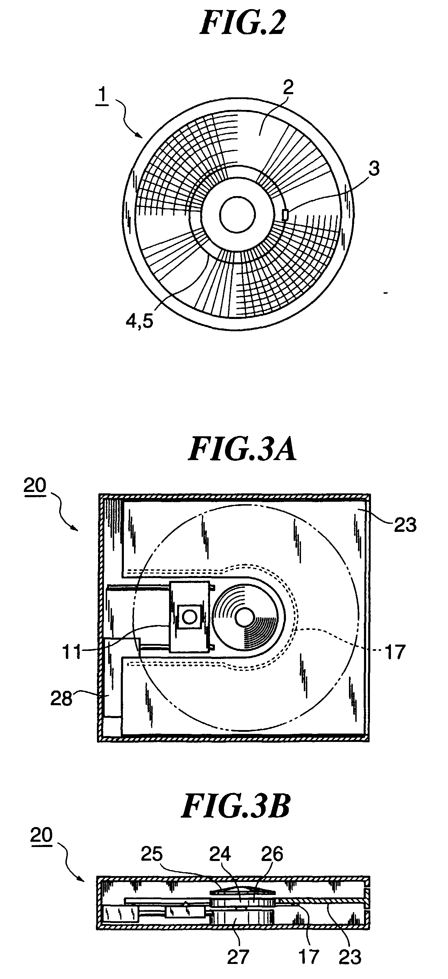

Fig. 2 is a schematic structural diagram of the optical disk 1 according to the invention; wherein reference numeral 2 denotes the recording medium; 3, the storage; and 4 and 5, respectively the receiver 4 and the transmitter/receiver for supplying power from the recording/reproduction apparatus side to the storage or communicating information between the storage and the recording/reproduction apparatus. Fig. 3 is a schematic structural diagram of the recording/reproduction apparatus 10 according to the invention, wherein reference numeral 11 denotes the disk medium recording/reproduction unit for performing recording/reproduction into or from the recording medium on the disk. Where it is for optical recording, its constituent elements include a laser serving as the light source, a detector for detecting reflected light and the like, and an actuator for focusing or tracking light in a prescribed position on the disk. Also, the disk medium recording/ reproduction unit 11 can be shifted by a seek mechanism 28 to a desired position on the disk. Reference numeral 17 denotes a communication unit for performing recording/reproduction into or from and power supply to the storage on the disk; and 23, a tray, which is an example of fittinq aid member. The user places the disk on the tray pulled out of the recording/ reproduction apparatus, and the tray is subsequently inserted into the recording/reproduction apparatus by the loading mechanism. The communication unit 17 is arranged in a part of the fitting aid member 23, and inserted by the loading mechanism into the recording/reproduction apparatus 10 together with the disk 1. The inserted disk is mounted on a turntable 24 and after the disk is clamped with a damper 25 to prevent the disk from being displaced even when it is turned, and is turned by a spindle motor 27.

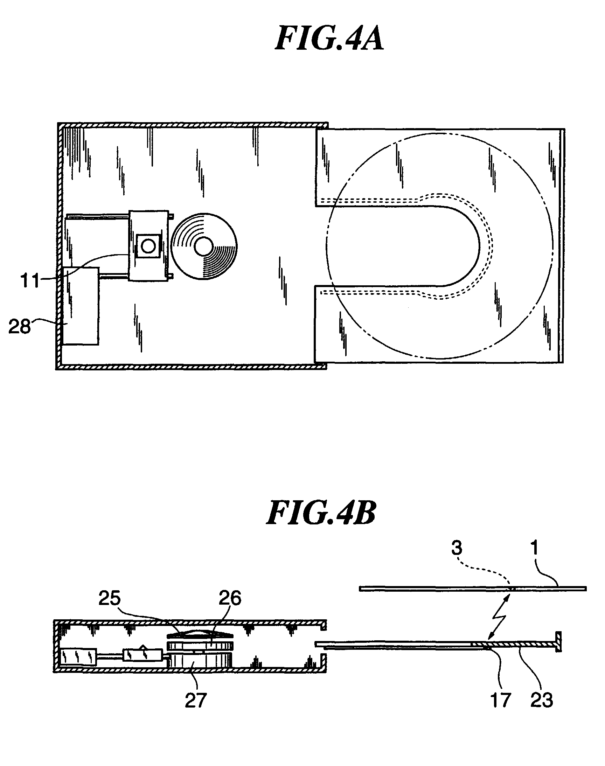

Fig. 4 is a diagram illustrating a method according to the invention by which recording/reproduction of information into or from the storage is performed in the recording/ production apparatus before the disk starts turning. The recording/reproduction apparatus 10, at the request of the user, pulls out the tray 23 out of the recording/reproduction apparatus with the opening/closing mechanism and the disk loading mechanism so that the user can mount the disk 1 into the recording/reproduction apparatus. Then, triggered by the operation of the opening/closing mechanism and the disk loading mechanism to pull the tray 23 put of the recording/reproduction apparatus, recording/reproduction of information into or from the storage 3 is performed. Thus, about at the same time as the tray on which to place the disk 1 is pulled out, the information that it is pulled out triggers power supply to the disk 1 and, after the storage on the disk is enabled to record or reproduce, the management information and catalog information for the main information recorded or to be recorded in the storage 3 is reproduced or recorded. In that while, the disk 1 itself is placed on the tray 23 by the user, and the pulled out tray is inserted into the recording/reproduction apparatus 10 by the disk loading mechanism to place the disk on the mounting face 26 of the turntable. Then, after the disk 1 is clamped with the clamper 25, the disk undergoes revolution control and signals recorded in the recording medium on the disk undergo focusing and tracking control, the information is recorded into or reproduced from the recording medium 2.

During this control, so that the recording/ reproduction of information can be stably accomplished between the storage 3 on the disk and the communication unit 17 in the recording/reproduction apparatus 10, the communication unit 17 is built into the tray 23, which the disk 1 approaches to make possible information transfer, communication beginning at the same time. After that the disk is placed on the tray, inserted into the recording/reproduction apparatus 10, and starts revolving. So that communication can take place during this revolution, too, at least part of a transmitter 19 and of the transmitter/receiver 20 of the communication unit 17 or part of the receiver 4 and of the transmitter/receiver 5 in the disk for transferring information to the storage on the disk is made circular or spiral. Since the management information and catalog information for the disk written in the storage on the disk are communicated to the recording/ reproduction apparatus or the user before recording/ reproduction into or from the recording medium in the disk as stated above, the recording/reproduction apparatus or the user can perform such an action as elect the disk if no recording onto the disk is permitted or, if it is a playback-restricted disk, can update anew the number of times it is permitted to be played back and play back the disk, before the servo-based control over the disk is completed, resulting in improved operational capability.

Although the foregoing description referred to a loading mechanism in which the disk is placed on a tray when it is to be loaded, but the mechanism is not confined to this arrangement, and instead, for instance, the disk may be inserted and ejected by only an opening/closing mechanism without tray. In this case, the start of the operation of the opening/closing mechanism may trigger the action to record into or reproduce from the storage.

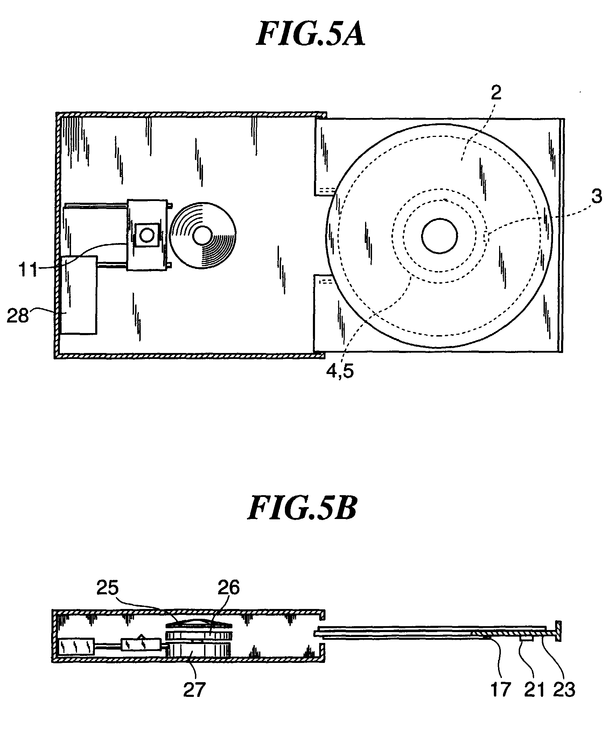

Whereas the foregoing described a method to record or reproduce information into or from the storage on the disk triggered by the start of operation of the disk loading mechanism, there is another embodiment which will be described with reference to Fig. 5. As illustrated in Fig. 5, a disk detector 21 to detect the placement of a disk 1 on a tray 23 is provided in a part of the pulled out tray 23.

The disk detector 21, as it turns after the disk is placed, should be a non-contact type device, such as a photosensor. The disk detector 21 is mounted in a prescribed position on the pulled out tray 23 or in a prescribed position within the recording/reproduction apparatus, and detects the mounting of the disk on the tray or insertion into the recording/ reproduction apparatus. Triggered by this detection, the recording/reproduction of information into or from the storage on the disk is started.

Alternatively, detection of the disk on a turntable 24 triggers the start of the recording/reproduction of information into or from the storage on the disk. In this case, too, a communication unit 17 for communication to the storage on the disk is provided on the tray 23 part of the recording/ reproduction apparatus. As this method it ensures that the start of the recording/reproduction of information into or from the storage in response to a detection signal from the disk detector follow the secure mounting of the disk by the user, the electric connection between the recording/reproduction apparatus and the storage is accomplished more reliably.

Further, while the recording/reproduction of information into or from the storage on the disk is started before the disk begins to turn in the foregoing embodiments, the recording/reproduction of information into or from the storage on the disk may as well start after the disk begins to turn if the disk medium recording/reproduction unit starts it before the disk reaches its regular speed of revolution at which the recording/reproduction of information into or from the recording medium on the disk becomes possible. Thus, in order to let the disk medium recording/reproduction unit record or reproduce information into or from the storage on the recording medium, focusing and tracking control are required, but making possible recording/reproduction into or from the storage without having to await them serves to improve operational capability.

Especially where it is determined with the disk medium recording/reproduction unit whether a given disk is a CD or a DVD before performing focusing and tracking control, in such a case, too, information can be reproduced from or written into the storage during or before the determination. Quicker operation can be achieved, though, by having the storage store the disk type information in advance and reproducing that disk type information before performing focusing and tracking control, because this eliminates the need for the disk medium recording/reproduction unit to determine the disk type.

The optical disk and the recording/reproduction apparatus according to the present invention are mounted within the optical disk with a storage for recording management information and catalog information for main information besides the recording medium recording the main information. Also a communication unit for recording or reproducing information into or from the storage is provided on the recording/reproduction apparatus side. In order to record or reproduce information into or from the storage before the disk starts turning, a disk turning device within the recording/ reproduction apparatus is provided with a fitting aid member so that the user can easily mount the disk, and the reproduction or recording of management information and catalog information for main information recorded or to be recorded in the storage is triggered by the operation of the opening/closing mechanism and the disk loading mechanism to pull the fitting aid member out of the recording/reproduction apparatus.

During this while, the disk itself records or reproduces information into or from the recording medium after undergoing revolution, focusing and tracking control. Therefore, the management information and catalog information written in the storage on the disk are conveyed to the recording/reproduction apparatus or the user during the aforementioned controls, so that, according to their contents, before the servo controls on the disk are completed, the recording/reproduction apparatus or the user can communicate, if the disk does not permit recording, the information to that effect to the user and eject the disk or, if it is a playback-restricted disk, can update anew the number of times it is permitted to be played back and play back the disk, resulting in improved operational capability.

Furthermore, a disk detector is mounted in a prescribed position on the pulled out tray or in a prescribed position in the recording/reproduction apparatus, the disk detector detects the mounting of the disk on the tray or its insertion into the recording/reproduction apparatus, and this detection triggers the start of the recording/reproduction of information into or from the storage on the disk. As this method ensures that the start of the recording/reproduction of information into or from the storage follow the secure mounting of the disk by the user, the electric connection between the recording/reproduction apparatus and the storage is accomplished more reliably.

## Claims

1. A recording/reproduction method for recording and/or reproducing respectively pertinent items of information into or from a recording medium arranged in a circular or spiral shape in a prescribed position and a storage arranged in another prescribed position, both on a disk, wherein recording and/or reproduction into or from said recording medium is performed in a state wherein the disk is turning and recording and/or reproduction into or from said storage is performed before the disk starts turning.

2. A recording/reproduction apparatus comprising a turning device for turning a disk having a recording medium arranged in a circular or spiral shape in a prescribed position and a storage arranged in another prescribed position; a device for recording and/or reproduction into or from said recording medium is performed in a state wherein said disk is turning; and a device for recording and/or reproducing into or from said storage before said disk starts turning.

3. A recording/reproduction apparatus, as claimed in Claim 2, wherein said storage is capable of recording and/or reproducing before said disk is fitted into a disk mounting position on said turning device to which said disk is fitted to perform recording and/or reproduction into or from said recording medium.

4. A recording/reproduction apparatus, as claimed in Claim 2, having a disk detector for detecting the fitting of said disk to said recording/reproduction apparatus, and the recording and/or reproduction of information into or from said storage is started on the basis of a signal from the disk detector.

5. A recording/reproduction apparatus, as claimed in Claim 2, wherein the recording and/or reproduction into or from said storage is performed before recording and/or reproduction into or from the recording medium is started.

6. A recording/reproduction apparatus, as claimed in Claim 2, having a fitting aid member for fitting said disk into a disk mounting position on said turning device, and the recording and/or reproduction into or from said storage is triggered by the start of an action of the fitting aid member to fit the disk.

7. A disk onto or from which information can be recorded and/or reproduced by a recording/reproduction apparatus claimed in Claim 2 wherein main information is recorded in said recording medium and information ancillary to the main information is recorded in said storage.
